# EUROPEAN PATENT APPLICATION

(11) **EP 4 000 835 A1**
(43) Date of publication of application: **25.05.2022**
(21) Application number: 20839600.2
(22) Date of filing: 17.07.2020
(51) Int. Cl.: B28B 7/36, B32B 13/12, E04G 23/02

(54) **STRUCTURE PROTECTION SHEET, EXECUTION METHOD AND PRECAST MEMBER USING STRUCTURE PROTECTION SHEET, AND METHOD FOR MANUFACTURING PRECAST MEMBER**

(30) Priority: 17.07.2019 JP 2019132332; 17.07.2019 JP 2019132333
(71) Applicant: Keiwa Inc., Tokyo 103-0025 (JP)
(72) Inventor: HORIUCHI, Noriyuki, Tokyo 103-0025 (JP); NAKAJIMA, Yoshiki, Tokyo 103-0025 (JP); NINOMIYA, Akira, Tokyo 103-0025 (JP); YOSHIDA, Masaki, Tokyo 103-0025 (JP); SHIMOTANI, Kenta, Tokyo 103-0025 (JP)
(74) Representative: Mewburn Ellis LLP
(86) International application number: PCT/JP2020/027758
(87) International publication number: WO 2021/010456

(57) **Abstract**

The present invention provides structure protection sheets which can not only dramatically reduce a construction period to place protective layers on surfaces of structures such as concrete but also protect structures for a long time. The present invention relates to a structure protection sheet, including: a polymer cement layer on a side facing a structure; and a resin layer on the polymer cement layer, the structure protection sheet having a thickness distribution of not more than ± 100 µm.

## Description

### TECHNICAL FIELD

The present invention relates to structure protection sheets, construction methods using the sheets, precast members including the sheets, and methods for producing precast members. Specifically, the present invention relates to structure protection sheets which can not only dramatically reduce a construction period to place protective layers on surfaces of structures such as concrete but also protect structures for a long time, construction methods using the sheets, precast members including the sheets, and methods for producing precast members.

### BACKGROUND ART

Repair work and reinforcement work are carried out on civil engineering structures, including road bridges, tunnels, river management facilities such as sluice gates, sewer pipes, and harbor quays, as the structures age. Repair work involves repairing defective parts or fragile parts and then repeatedly applying a coating material to the repaired parts. Reinforcement work involves repeatedly applying a reinforcement coating material to the entire part to be reinforced.

The recoating in repair work and reinforcement work is performed in the order of, for example, under coating, intermediate coating, and final coating. Usually, intermediate coating and final coating are each repeated two or three times. In each coating process, coating cannot be continuously repeated because each coat needs to be dried. It takes at least five days to form five layers by, for example, under coating, first intermediate coating, second intermediate coating, first final coating, and second final coating. Moreover, coating is carried out outside and affected by weather. In a rainy weather, drying may be insufficient, or even coating work is cancelled. Therefore, it is difficult to shorten a construction period, and the labor cost increases because of the construction period, resulting in a high construction cost. In addition, the qualities (film thickness, surface roughness, moisture content, etc.) of applied coats tend to be unstable under the influence of the external environment (humidity, temperature, etc.) during the coating process.

Coating is done by troweling, spraying, or the like. Whether stable repair and reinforcement can be achieved by uniform coating depends largely on the skill of a craftsman. Thus, the qualities of applied coats vary according to the skill of the craftsman. Furthermore, along with aging or a decrease in population of construction workers, the number of workers engaged in repairing and reinforcing concrete has been decreasing. Simpler repair methods which can be carried out even not by skilled workers are awaited.

To solve those issues, Patent Literature 1, for example, suggests a technique to provide a sheet and a method which are simple and low cost, reduce a construction period, and reliably prevent concrete from deteriorating. The technique is a concrete repair method including: attaching a concrete repair sheet with a construction adhesive agent to a concrete surface to be repaired, the sheet including an intermediate layer having a resin film and a woven material surface layer stacked via an adhesive resin on each surface of the intermediate layer; and applying a coating composition to the attached concrete repair sheet on a surface opposite to the surface facing the concrete. Concrete repair sheets, typically the one in Patent Literature 1, include a resin film substrate and a reinforcement sheet on the substrate with an adhesive layer interposed therebetween.

Coating materials have been improved. For example, Patent Literature 2 suggests a method to protect concrete structures using a coating material that can prevent alkali-aggregate reaction, excellently conform to cracks of concrete structures, prevent an applied coat from blistering due to temperature rise after the formation of the coat, and avoid peeling off of concrete. The technique involves forming a base conditioning material coat on a surface of a concrete structure, and then forming a coat on the surface of the base conditioning material coat. The base conditioning material coat has a composition including a cationic (meth)acryl polymer emulsion and an inorganic hydraulic substance. The coat formed on the surface of the base conditioning material coat includes a composition that contains an alkyl (meth)acrylate emulsion and an inorganic hydraulic substance, and has a degree of elongation at 20°C of 50 to 2000%, resistance to salt permeation of 10⁻² to 10^{- 4} mg/cm² · day, a water vapor transmittance of not less than 5 g/m² · day, and a film thickness of 100 to 5000 µm.

### CITATION LIST

Patent Literature 1: JP 2010-144360 A
Patent Literature 2: JP 2000-16886 A

### SUMMARY OF INVENTION

### - Technical Problem

Conventional concrete repair sheets, including the one in Patent Literature 1, have issues to overcome, such as: differences in adhesive strength between a substrate and other layers (for example, an adhesive layer or a reinforcement member); differences in elongation among a substrate, an adhesive layer, a reinforcement member, etc.; and an adhesion strength between an adhesive layer and concrete. Specifically, when a pressure is applied to a concrete repair sheet that includes a substrate and a reinforcement member attached with an adhesive layer, during or after the construction of the sheet, differences in elongation among the substrate, the adhesive layer, and the reinforcement member may cause layer interface separation derived from a difference in the adhesive strength between the substrate and the adhesive layer or between the adhesive layer and the reinforcement member.

The adhesive layer on the concrete repair sheet is softened by heating or the like to be attached to concrete. If the adhesion strength is insufficient, the concrete repair sheet may separate from the surface of the concreate, failing to function as a repair sheet. Moreover, concrete to which a concrete repair sheet is attached sometimes swells with time. Presumably, this phenomenon occurs because the repair sheet has a low water vapor transmittance and thus prevents water vapor inside the concrete from escaping.

As discussed above in BACKGROUND ART, a method in which a coat is formed by application at a construction site needs one day for one layer coating. For example, it takes six days to form a coat consisting of six layers including undercoat layer(s) and uppercoat layer(s). Such a coat disadvantageously has an uneven film thickness and tends to have unstable qualities and properties such as surface roughness and moisture content.

The present invention aims to solve the above issues and provide structure protection sheets which can not only dramatically reduce a construction period to place protective layers on surfaces of structures such as concrete or precast members but also protect structures for a long time, construction methods using the sheets, precast members including the sheets, and methods for producing precast members.

Precast members are concrete products produced in advance in a factory, etc. to be assembled and installed at a construction site. Precast members are transferred to a construction site by a transport vehicle. Large precast members are transferred by large trailers. They are installed one after another at the construction site to build large structures, such as road bridges, tunnels, and sewer pipes.

### - Solution to Problem

The present inventors studied to develop concrete protection sheets capable of stably protecting concrete for a long time without depending on a construction method to form a layer on a concrete surface by a coating technique. As a result, the inventors established a technical idea that can provide a concrete protection sheet with functions appropriate for the properties of concrete, specifically, conformity to cracks or swelling of concreate, waterproofness to prevent entry of water or degradation factors such as chloride ion into concreate, resistance to salt permeation, inhibition of neutralization, and a water vapor transmittance allowing for emission of moisture in concrete as water vapor. Accordingly, the present invention has been completed. The technical idea is applicable as structure protection sheets for non-concrete structures.
(1) A structure protection sheet of the present invention includes: a polymer cement layer on a side facing a structure; and a resin layer on the polymer cement layer, the structure protection sheet having a thickness distribution of not more than ± 100 µm.

According to the invention, the thickness distribution is within the above range, allowing even not a skilled worker to stably place a layer with no or small thickness variation on a surface of a structure. The polymer cement layer on a side facing a structure is excellent in adhesion to a structure and the like. The resin layer on the polymer cement layer is excellent in waterproofness, resistance to salt permeation, inhibition of neutralization, etc. The structure protection sheet does not include such structural elements as substrates, adhesive layers, and reinforcement members. Thus, the sheet is less susceptible to the conventional problems derived from differences in the adhesive strength among the structural elements or differences in elongation among the structural elements. Moreover, the problem derived from the adhesion strength between an adhesive layer and a structure such as concrete is less likely to occur. Furthermore, the structure protection sheet can be mass-produced with less variation in the thickness distribution in a production line including coating and drying in a factory, thereby achieving low cost, dramatic reduction in the work period at a construction site, and long-term protection of structures.

In the structure protection sheet of the present invention, the polymer cement layer and the resin layer each may consist of a single layer or a stack of layers.

According to the invention, whether each layer should be a single layer or a stack of layers may be optionally selected in consideration of the thickness of the entire sheet, functions to impart (conformity, waterproofness, resistance to salt permeation, inhibition of neutralization, attachability, water vapor transmittance, etc.), production cost, etc.

In the structure protection sheet of the present invention, the polymer cement layer is a layer of a cement component-containing resin. The term "polymer cement" in the present invention is used regardless of the proportion of resin components in the composition of the polymer cement.

The polymer cement layer in the invention has excellent conformity and high compatibility and therefore has excellent adhesion. The cement component in the polymer cement layer on a side facing a structure increases the adhesion to a structure such as concrete.

The structure protection sheet of the present invention may include a release sheet on a face of either the polymer cement layer or the resin layer.

The invention may contain a release sheet. The release sheet can protect a surface of the structure protection sheet during transfer to a construction site, for example. The release sheet may be removed at the construction site before attachment. Preferably, the release sheet is a processing paper used in a production process of the structure protection sheet.

The structure protection sheet of the present invention may be a waterproof sheet having a water vapor transmission rate of 10 to 50 g/m² · day.

The invention of this embodiment is a waterproof sheet having a water vapor transmission rate within the above range. Thus, the sheet can not only prevent entry of moisture or degradation factors from outside into a structure such as concrete but also transmit moisture in the structure as water vapor to the outside.

(2) A construction method using the structure protection sheet of the present invention includes: applying an adhesive agent to a structure; and then attaching the structure protection sheet.

The invention uses the structure protection sheet that consists only of a layer including no substrate or no reinforcement member and has no or small thickness variation. Thus, the method enables easy attachment to a surface of a structure, allowing even not a skilled worker to stably place a layer with no or small thickness variation on a surface of the structure. The method can not only dramatically reduce a construction period but also protect structures for a long time.

In the construction method of the present invention, an undercoat layer may be placed between the structure and the adhesive agent.

In the invention of this embodiment, the adhesion between the structure and the adhesive agent is increased by the undercoat layer placed between them. Thus, the structure protection sheet can stably protect the structure for a long time.

(3) A precast member of the present invention has the structure protection sheet of the present invention on a portion or the entirety of its surface with no adhesive agent in between.

In the invention, a protection sheet having no or small thickness variation is present on a surface of concreate etc. with no adhesive agent on the surface, and such a structure may be providable even not by a skilled worker. Thus, the cost for the precast member that is usable with no defect for a long time can be reduced.

(4) A method for producing a precast member of the present invention includes: placing a structure protection sheet on an inner surface of a molding frame; and then pouring a concrete formation composition into the molding frame to produce a precast member, wherein the precast member has the structure protection sheet on a portion or the entirety of its surface, the structure protection sheet includes a polymer cement layer and a resin layer on the polymer cement layer, and the structure protection sheet has a thickness distribution of not more than ± 100 µm.

The invention enables easy production of a precast member covered with the structure protection sheet. Unlike conventional methods in which a structure protection sheet is attached to a preliminarily-produced precast member, no undercoat layer and no adhesive layer is present between concreate and the structure protection sheet, thereby achieving strong adhesion between the concrete and the polymer cement layer.

### - Advantageous Effects of Invention

The present invention can provide a structure protection sheet capable of protecting structures such as concrete for a long time, a construction method using the structure protection sheet, a precast member including the structure protection sheet, and a method for producing a precast member. In particular, the structure protection sheet is provided with functions appropriate for the properties of a structure and thus achieves conformity to cracks or swelling of the structure, prevention of entry of water or degradation factors such as chloride ion into the structure, transmittance allowing for emission of moisture or degradation factors from the structure, and the like. Furthermore, the present invention advantageously improves the stability and uniformity of the quality, compared to layers formed so far by manual coating.

### BRIEF DESCRIPTION OF DRAWINGS

Fig. 1 illustrates cross-sectional structural views showing one example of the structure protection sheet of the present invention.
Fig. 2 illustrates cross-sectional structural views showing another example of the structure protection sheet of the present invention.
Fig. 3 illustrates explanatory views showing a construction method using a structure protection sheet.
Fig. 4 illustrates explanatory views showing an example in which a structure protection sheet is used in the cast-in-place method.
Fig. 5 illustrates explanatory views showing an example of the precast member of the present invention.
Fig. 6 illustrates explanatory views showing a molding frame to produce a precast member.
Fig. 7 illustrates explanatory views showing one example of a method for producing a precast member.

### DESCRIPTION OF EMBODIMENTS

Hereinbelow, the structure protection sheet of the present invention, a construction method using the structure protection sheet, a precast member including the structure protection sheet, and a method for producing a precast member are described with reference to the drawing. The present invention may be variously modified, provided that the technical feature is maintained, and is not limited to the following embodiments and drawings.

### [Structure protection sheet]

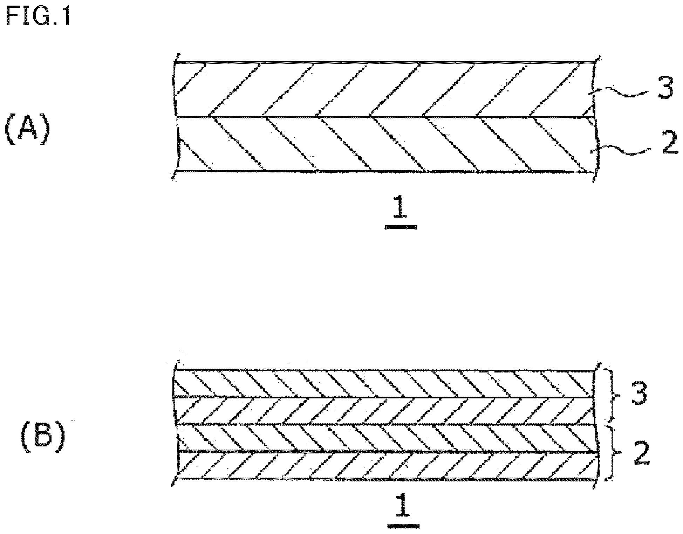

As illustrated in Fig. 1 to Fig. 3, a structure protection sheet 1 of the present invention includes: a polymer cement layer 2 on a side facing a structure 21; and a resin layer 3 on the polymer cement layer 2. The structure protection sheet 1 has a thickness distribution of not more than ± 100 µm, preferably not more than ± 50 µm. The polymer cement layer 2 and the resin layer 3 may each consist of a single layer or a stack of layers.

The structure protection sheet 1 has a thickness distribution within the above range, allowing even not a skilled worker to stably place a layer with no or small thickness variation on a surface of the structure 21. The polymer cement layer 2 on a side facing the structure is excellent in adhesion to the structure 21 and the like. The resin layer 3 on the polymer cement layer 2 is excellent in waterproofness, resistance to salt permeation, inhibition of neutralization, etc. The structure protection sheet 1 includes none of such structural elements as substrates, adhesive layers, and reinforcement members. Thus, the sheet is less susceptible to problems derived from differences in the adhesion strength among such structural elements or differences in elongation among the structural elements. Moreover, the problem derived from the adhesion strength between an adhesive layer and a structure such as concrete is less likely to occur. Furthermore, the structure protection sheet 1 can be mass-produced with less variation in the thickness distribution in a production line including coating and drying in a factory, thereby achieving low cost, dramatic reduction in the work period at a construction site, and long-term protection of structures. Therefore, the structure protection sheet 1 can not only dramatically reduce a construction period to be attached to a surface of the structure 21 but also protect the structure 21 for a long time.

Specific examples of each structural element are described below.

### (Structure)

The structure 21 is a mating member to which the structure protection sheet 1 of the present invention is attached. Examples of the structure 21 include structures made of concrete. Concrete is generally obtained by casting and curing a cement composition at least containing a cement-based inorganic substance, an aggregate, an admixture, and water. Such concrete is widely used as civil engineering structures, including road bridges, tunnels, river management facilities such as sluice gates, sewer pipes, and harbor quays. In the present invention, the structure protection sheet 1 is applied to the structure 21 made of concrete, thereby achieving marked advantages such as conformity to cracks or swelling of the concreate, prevention of entry of water or degradation factors such as chloride ion into the concreate, and emission of moisture in the concrete as water vapor.

### (Polymer cement layer)

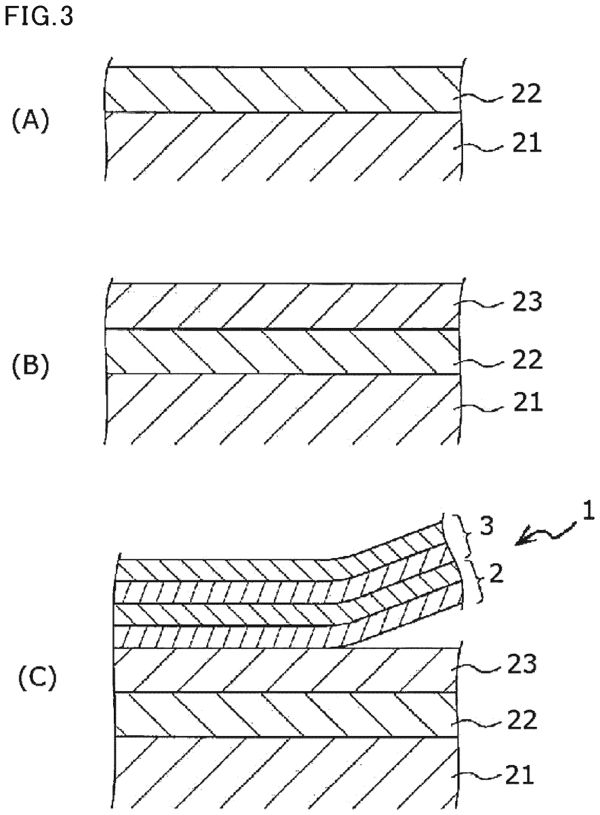

As illustrated in Fig. 3(C), the polymer cement layer 2 is present on a side facing a structure. For example, the polymer cement layer 2 may be a single layer formed without repeating coating as illustrated in Fig. 1(A) or a stack of layers formed by repeating coating as illustrated in Fig. 1(B). Whether the layer should be a single layer or a stack of layers may be optionally determined in consideration of the thickness of the entire sheet, functions to impart (conformity, attachability to a structure, etc.), production line in a factory, production cost, etc. For example, when the production line is too short to form a single layer having a prescribed thickness, the layer may be formed by repeating coating twice or more. For example, in the repeat coating for two layers, the second layer is formed after the first layer is dried.

The polymer cement layer 2 is obtainable by applying a coating composition that is prepared by processing a cement component-containing resin (resin component) into a coating composition. Examples of the cement component include various types of cement, limestones containing calcium oxide components, and clays containing silicon dioxide. Cement is preferred among these. Preferred examples of the cement include Portland cement, alumina cement, high-early-strength cement, and fly ash cement. The cement is selected according to the properties that the polymer cement layer 2 should have. For example, the cement is selected in consideration of the degree of conformity to the concrete structure 21. In particular, Portland cement stipulated in JIS R5210 is preferred.

Examples of the resin component include acrylic resin, acrylic urethane resin, acrylic silicone resin, fluororesin, flexible epoxy resins, and polybutadiene rubbers. The resin component is preferably the same as the resin component constituting the resin layer 3 described later to increase the adhesion between the polymer cement layer 2 and the resin layer 3.

The coating composition to form the polymer cement layer 2 is a coating solution prepared by mixing the cement component and the resin component using a solvent. The resin component is preferably an emulsion. For example, an acrylic emulsion is a polymer fine powder prepared by emulsion polymerization of an acrylate monomer or the like using an emulsifier. Preferred examples include an acrylic acid polymer emulsion that is obtainable by polymerizing a monomer or a monomer mixture, containing one or more acrylate and methacrylate, in water containing a surfactant. The amount of the acrylate or the like in the acrylic emulsion is selected from a range of 20 to 100% by mass, though not limited thereto. The amount of the surfactant is not limited and may be determined as necessary. Still, the surfactant is added in an amount at which an emulsion can be formed.

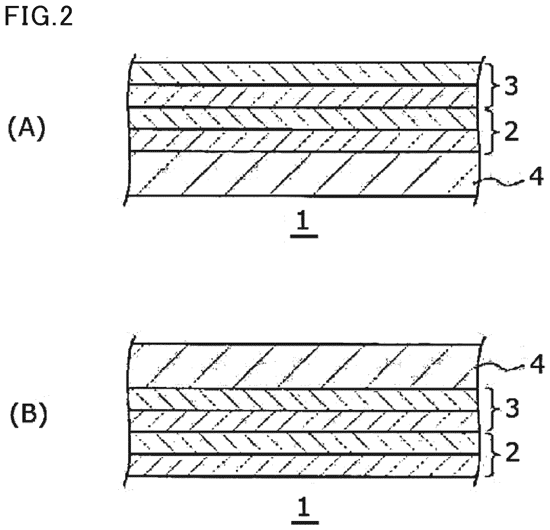

The polymer cement layer 2 is formed by applying the coating solution to the release sheet 4 and then evaporating the solvent (water) by drying. For example, the polymer cement layer 2 is formed using a mixed composition of a cement component and an acrylic emulsion as a coating solution. As illustrated in Fig. 2(A), the resin layer 3 may be formed after the polymer cement layer 2 is formed on the release sheet 4. Alternatively, as shown in Fig. 2(B), the polymer cement layer 2 may be formed after the resin layer 3 is formed on the release sheet 4.

The thickness of the polymer cement layer 2 is not limited and may be optionally determined according to the usage form (civil engineering structures, including road bridges, tunnels, river management facilities such as sluice gates, sewer pipes, and harbor quays), age, shape, etc. of the structure 21. For example, the thickness may be selected from a range of 0.5 mm to 1.5 mm. In an exemplary embodiment, the polymer cement layer 2 having a thickness of 1 mm has a thickness variation of not more than ± 100 µm. The thickness accuracy would never be achieved by coating at a construction site and is achievable only by stable coating in a production line in a factory. When the thickness is less than 1 mm, the thickness variation can be further reduced.

The polymer cement layer 2, due to the presence of the cement component, can better transmit water vapor than the resin layer 3 described later. For example, the water vapor transmission rate is about 10 to 50 g/m² · day. The cement component is highly compatible with a cement component constituting, for example, concrete and therefore provides excellent adhesion to a surface of the concreate. When an undercoat layer 22 and an adhesive agent 23 are stacked on a surface of the structure 21 in the order illustrated in Fig. 3, the polymer cement layer 2 containing a cement component closely adheres to the adhesive agent 23. The polymer cement layer 2 is stretchable. Thus, even if cracks or swelling occurs in the structure 21, the polymer cement layer 2 can conform to the changes in the concrete.

### (Resin layer)

As illustrated in Fig. 3(C), the resin layer 3 is a layer appearing on the surface on the side opposite to the structure 21. For example, the resin layer 3 may be a single layer as illustrated in Fig. 1(A) or a stack of layers as illustrated in Fig. 1(B). Whether the layer should be a single layer or a stack of layers may be optionally determined in consideration of the thickness of the entire sheet, functions to impart (waterproofness, resistance to salt permeation, inhibition of neutralization, water vapor transmittance, etc.), the length of the production line in a factory, production cost, etc. For example, when the production line is too short to form a single layer having a prescribed thickness, the layer may be formed by repeating coating twice or more. In the repeat coating, a second layer is applied after the first layer is dried. Thereafter, the second layer is dried.

The resin layer 3 is flexible and can conform to cracks or fissures of concrete. The resin layer 3 is obtainable by applying a coating composition that can form the resin layer 3 excellent in waterproofness, resistance to salt permeation, inhibition of neutralization, and water vapor transmittance. Examples of the resin constituting the resin layer 3 include an acrylic resin having the characteristics of rubber, acrylic urethane resin, acrylic silicone resin, fluororesin, flexible epoxy resin, and polybutadiene rubber. The resin material is preferably the same as the above-mentioned resin component constituting the polymer cement layer 2. Preferably, it is a resin containing a component capable of forming an elastic film.

In particular, the acrylic resin having the characteristics of rubber preferably includes an aqueous emulsion of an acrylic rubber copolymer because it is excellent in safety and coatability. The acrylic rubber copolymer content of the emulsion is, for example, 30 to 70% by mass. For example, the acrylic rubber copolymer emulsion is obtainable by emulsion polymerization of a monomer in the presence of a surfactant. The surfactant may be any of anionic, nonionic, and cationic surfactants.

The polymer composition to form the resin layer 3 is a mixed coating solution of a resin composition and a solvent. The resin layer 3 is formed by applying the coating solution to the release sheet 4, and then evaporating the solvent by drying. The solvent may be water or an aqueous medium. Alternatively, the solvent may be an organic medium such as xylene or a mineral spirit. In the examples described later, an aqueous medium is used, and the resin layer 3 is prepared using an acrylic rubber composition. Preferably, the resin layer 3 is formed on the release sheet 4, and then the polymer cement layer 2 is formed, as in the examples described later.

The thickness of the resin layer 3 is not limited and may be optionally determined according to the usage form (civil engineering structures, including road bridges, tunnels, river management facilities such as sluice gates, sewer pipes, and harbor quays), age, shape, etc. of the structure 21. For example, the thickness may be selected from a range of 50 to 150 µm, and the thickness variation is preferably not more than ± 50 µm. The thickness accuracy would never be achieved by application at a construction site but is achievable in a production line in a factory.

The resin layer 3 has high waterproofness, resistance to salt permeation, and inhibition of neutralization and also can transmit water vapor. The resin layer 3 has a water vapor transmission rate of desirably about 10 to 50 g/m² · day, for example. The resin layer 3 having the specific water vapor transmission rate can impart high waterproofness, resistance to salt permeation, inhibition of neutralization, and a prescribed water vapor transmittance to the structure protection sheet 1. Moreover, the resin layer 3 including the same resin component as one in the polymer cement layer 2 is highly compatible with the polymer cement layer 2 and has excellent adhesion. The water vapor transmittance is measured in accordance with "Testing Methods for Determination of the Water Vapor Transmission Rate of Moisture Proof Packaging Materials" stipulated in JIS Z0208.

The produced structure protection sheet 1 may have the release sheet 4 on a face of either the polymer cement layer 2 or the resin layer 3. The release sheet 4 can protect a surface of the structure protection sheet 1 during transfer to a construction site, for example. The release sheet 4 may be easily removed at the construction site before attachment. Preferably, the release sheet 4 is a processing paper used in a production process of the structure protection sheet 1.

The material or the like of the processing paper used as the release sheet 4 may be any known material used in production processes. Examples include lamination paper including a layer of olefin resin such as polypropylene or polyethylene, like known processing papers. The thickness of the processing paper is not limited. For example, the thickness may be within a range of about 50 to about 500 µm, provided that the thickness does not hinder the production, construction, and handling.

The structure protection sheet 1 described above can protect the structure 21 such as concrete. Specifically, the structure protection sheet 1 is provided with functions appropriate for the properties of the structure 21, thereby achieving conformity to cracks or swelling of the structure 21, prevention of entry of water or degradation factors such as chloride ion into the structure 21, and transmittance allowing for emission of moisture or degradation factors from the structure. The structure protection sheet 1 can be produced in a factory, enabling mass production of high quality products with stable properties. Thus, construction can be carried out even without craftsman's skill, and thus reduction of a construction period and labor cost cut can be achieved.

### [Construction method using structure protection sheet]

As illustrated in Fig. 3, the construction method using a structure protection sheet of the present invention uses the structure protection sheet 1 of the present invention. The method includes applying the adhesive agent 23 to the structure 21 and then attaching the structure protection sheet 1. The construction method uses the structure protection sheet 1 that consists only of a layer including no substrate or no reinforcement member and has no or small thickness variation. Thus, the method enables easy attachment of the structure protection sheet 1 to a surface of the structure 21, allowing even not a skilled worker to place the structure protection sheet 1 consisting of a layer with no or small thickness variation on a surface of the structure 21. The method can not only dramatically reduce a construction period but also protect the structure 21 for a long time.

Fig. 3 illustrates explanatory views showing a construction method using the structure protection sheet 1. As illustrated in Fig. 3(A), the undercoat layer 22 is formed on a surface of the structure 21 in the construction. The undercoat layer 22 may be formed by mixing a resin such as an epoxy resin with a solvent to prepare a coating solution, applying the coating solution to the structure 21, and then evaporating the solvent in the coating solution by drying. Examples of the solvent include water and the like described above. The thickness of the undercoat layer 22 is not limited and may be, for example, in a range of 100 to 150 µm. The adhesion between the structure 21 and the adhesive agent 23 is increased by the undercoat layer 22 placed between them. Thus, the structure protection sheet 1 can stably protect the structure 21 for a long time. If the structure 21 has cracks or defective parts, the undercoat layer 22 is preferably placed after the cracks or defective parts are repaired. The repairment is not limited. Usually, cement mortar, an epoxy resin, or the like is used.

After the formation of the undercoat layer 22, the adhesive agent 23 is applied as illustrated in Fig. 3(B). As illustrated in Fig. 3(C), the structure protection sheet 1 is attached to the applied adhesive agent 23 that is not dried. Examples of the adhesive agent 23 include urethane adhesive agents and epoxy adhesive agents. The adhesive agent 23 more preferably contains the resin component that constitutes the polymer cement layer 2 in the structure protection sheet 1 so as to increase the adhesive strength to the polymer cement layer 2. The thickness of the adhesive agent 23 is not limited. The adhesive agent 23 is usually applied to concrete by brush coating, spraying, or the like and is then cured by natural drying with time.

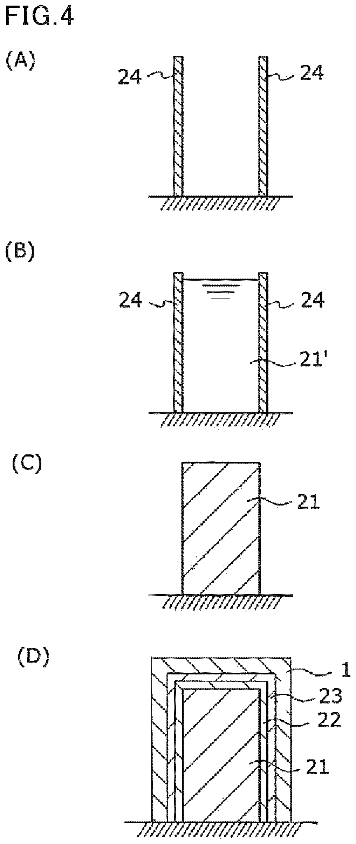

Fig. 4 illustrates explanatory views showing an example in which the structure protection sheet 1 is used in the cast-in-place method. The cast-in-place method refers to a construction method including: forming a molding frame 24 at a construction site; pouring a concrete composition 21' into the molding frame 24; and leaving it until it is cured, thereby producing the concrete structure 21. In the cast-in-place method, the structure protection sheet 1 attached to a surface of the cured concrete structure 21 makes the structure 21 to be less susceptible to degradation. The attachment is carried out by coating a surface of the concrete structure 21 with the undercoat layer 22, followed by drying; applying the adhesive agent 23 to the undercoat layer 22, and attaching the structure protection sheet 1. Next, the adhesive agent 23 is cured by natural drying, so that the structure protection sheet is adhered.

If the structure 21 already has cracks or the like, the structure protection sheet 1 is attached by the construction method described above after the defective parts are repaired. Thus, the concrete structure 21 can obtain a longer life.

### [Precast member]

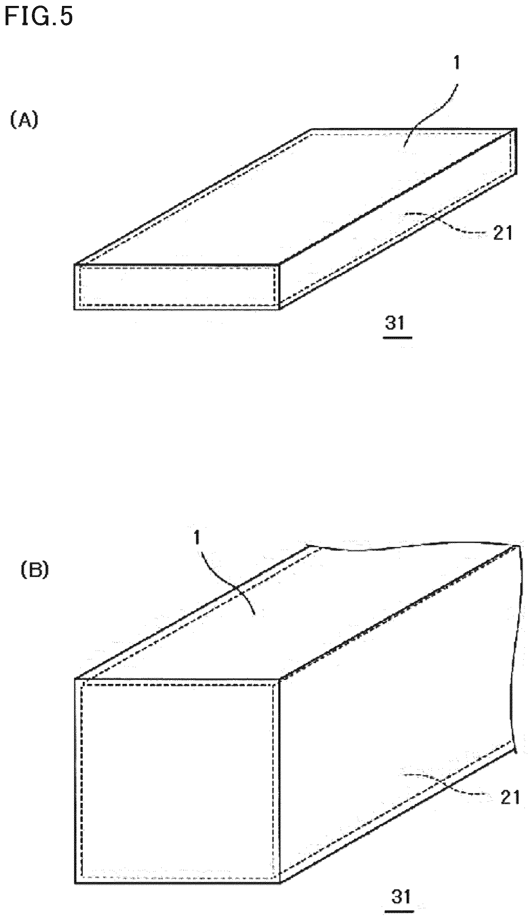

The precast member of the present invention is used the structure protection sheet of the present invention (hereinafter, also referred to as the protection sheet). Specifically, the precast member 31 of the present invention has the protection sheet 1 on a portion or the entirety of its surface with no adhesive agent in between as illustrated in Fig. 5. The protection sheet 1 includes the polymer cement layer 2 and the resin layer 3 on the polymer cement layer 2 and has a thickness distribution of not more than ± 100 µm. The polymer cement layer 2 constituting the protection sheet 1 is obtainable by applying a cement component-containing resin. The resin layer 3 is obtainable by applying a resin containing a component capable of forming an elastic film.

In the precast member 31, the protection sheet 1 having no or small thickness variation is present on a surface of the concreate 21 with no adhesive agent in between, and such a structure may be providable even not by a skilled worker. Thus, the cost for the precast member 31 that is usable with no defect for a long time can be reduced. The layers 2 and 3 constituting the protection sheet 1 each have excellent conformity and high compatibility and therefore have excellent adhesion. The polymer cement layer 2 on a side facing the concrete 21 is excellent in adhesion to the concrete 21, etc. The resin layer 3 on the polymer cement layer 2 is excellent in waterproofness, resistance to salt permeation, inhibition of neutralization, etc. The protection sheet 1 includes none of such structural elements as substrates, adhesive layers, and reinforcement members. Thus, the sheet is less susceptible to the conventional problems derived from differences in the adhesion strength among such structural elements or differences in elongation among the structural elements. Furthermore, the protection sheet 1 can be mass-produced with less variation in the thickness distribution in a production line including coating and drying in a factory, thereby achieving cost reduction.

Each structural element is described in detail below.

### [Precast member]

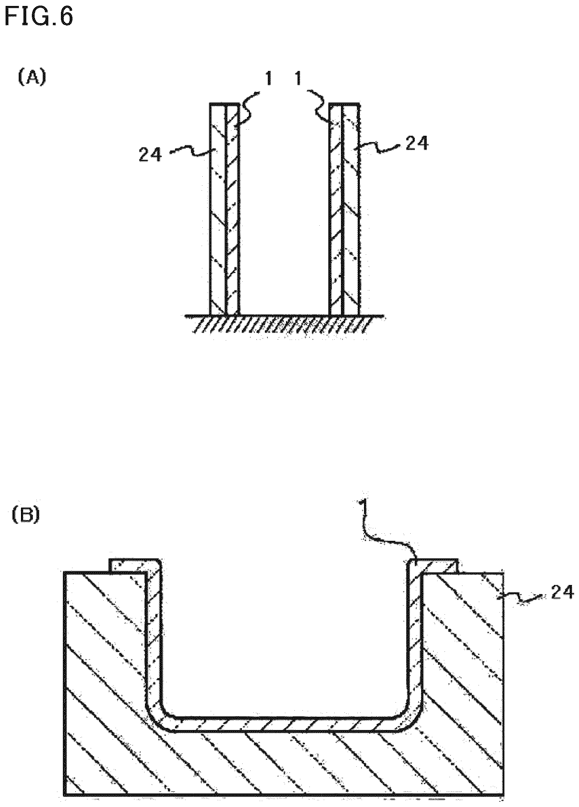

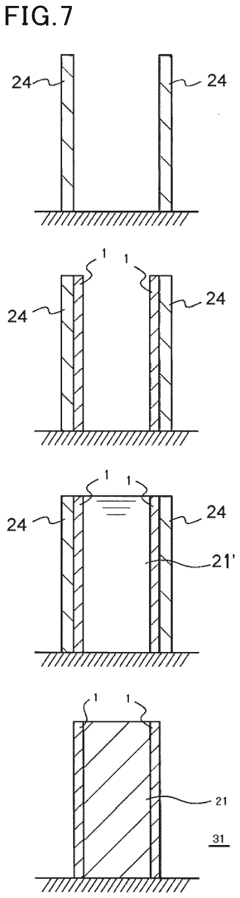

As illustrated in Fig. 5, the precast member 31 has the protection sheet 1 on a portion or the entirety of its surface with no adhesive agent in between. As illustrated in Fig. 6 and Fig. 7, the precast member 31 is produced by placing the protection sheet 1 on an inner surface of the molding frame 24; and then pouring the concrete composition 21' into the molding frame. The produced precast member 31 has the protection sheet 1 on a portion or the entirety of its surface. The protection sheet 1 includes the polymer cement layer 2 and the resin layer 2 disposed on the polymer cement layer 2. The structure protection sheet 1 has a thickness distribution of not more than ± 100 µm, preferably not more than ± 50 µm.

The precast member 31 includes the concrete 21. The precast member 31 is generally produced by casting and curing a cement composition at least containing a cement-based inorganic substance, an aggregate, an admixture, and water. The precast member 31 is widely used as civil engineering concrete such as road bridges, tunnels, river management facilities such as sluice gates, sewer pipes, and harbor quays. In the present invention, the protection sheet 1 is used in the precast member 31, thereby achieving marked advantages such as conformity to cracks or swelling of the concrete 21, prevention of entry of water or degradation factors such as chloride ion into the concrete 21, and emission of moisture in the concrete 21 as water vapor.

The production method enables easy production of the precast member 31 covered with the protection sheet 1. Unlike conventional construction methods, strong adhesion between the concrete 21 and the polymer cement layer 2 can be achieved even when the adhesive agent 23 is not placed between the precast member 31 and the protection sheet 1. Fig. 6 illustrates explanatory views showing the molding frame 24 to produce the precast member 31. Fig. 7 illustrates explanatory views showing one example of a method for producing the precast member 31.

As illustrated in Fig. 6, the molding frame 24 is configured according to the intended use, size, and shape of the precast member 31 to be produced. The molding frame 24 may be of any type. Usually it is a wooden frame but may be a molding frame made of a different material. The molding frame 24 may contain a reinforcement member such as rebar as necessary. The molding frame may be reinforced from outside by a reinforcement member such as steel as necessary.

The protection sheet 1 is placed on an inner surface of the molding frame 24. The placement of the protection sheet 1 on an inner surface of the molding frame 24 may include temporal fixing or the like of the protection sheet 1 to an inner surface of the molding frame 24. For the molding frame 24 having a concave shape as illustrated in Fig. 6(B), the protection sheet 1 may only be pressed to an inner surface of the molding frame 24 because subsequently the concrete composition 21' is poured thereinto. The concrete composition 21' is an uncured concrete fluid and can easily be poured into the molding frame. The concrete composition 21' may contain materials to impart various properties (reinforcement materials, etc.) as necessary.

The poured concrete composition 21' is usually cured by natural drying. As illustrated in Fig. 3, the cured concrete 21 is covered with the concrete 21 on a portion or the entirety of its surface to be the precast member 31. The precast member 31 is protected by the protection sheet 1 for a long time and does not suffer cracks or swelling. The protection sheet 1 also prevents water or degradation factors such as chloride ion from entering the concrete 21. Moreover, moisture in the concrete 21 is emitted as water vapor, so that the concrete 21 does not swell. The precast member 31 can be produced in a facility such as a factory, enabling mass production of high quality products with stable properties. Thus, construction can be carried out without craftsman's skill, and accordingly reduction of a construction period and labor cost cut can be achieved.

### (Protection sheet)

The protection sheet 1 is as described for the structure protection sheet of the present invention.

The protection sheet 1 can protect the precast member 31 for a long time. Specifically, the protection sheet 1 can provide performances appropriate for the properties of the precast member 31, thereby achieving conformity to cracks or swelling of the concrete 21, prevention of entry of water or defective factors such as chloride ion into the concrete 21, and transmittance allowing for emission of moisture or degradation factors from the concrete.

As described above, the production method can not only dramatically reduce a construction period to place a protective layer on a surface of the precast member 31 but also protect the precast member 31 for a long time. The protection sheet 1 having no or small thickness variation is present on a surface of the concreate 21 with no adhesive agent on the surface, and such a structure may be providable even not by a skilled worker. Thus, the cost for the precast member 31 that is usable with no defect for a long time can be reduced.

### EXAMPLES

The present invention is more specifically described with reference to examples and comparative examples.

### [Example 1]

A release sheet 4 including a PP lamination paper and having a thickness of 130 µm was used. A polymer cement layer-forming composition was applied to the release sheet 4 and dried to form a single polymer cement layer 2 having a thickness of 1.29 mm. Then, a resin layer-forming composition containing an acrylic resin was applied to the polymer cement layer 2 and dried to form a single resin layer 3 having a thickness of 100 µm. Accordingly, a structure protection sheet 1 having a total thickness of 1.39 mm was produced. The structure protection sheet 1 was continuously produced in a factory at a controlled temperature of about 25°C and wound up together with the release sheet 4 into a roll.

The polymer cement layer-forming composition is a water-based acrylic emulsion containing 45 parts by mass of a cement mixture. The cement mixture at least contains 70 ± 5 parts by mass of Portland cement, 10 ± 5 parts by mass of silicon dioxide, 2 ± 1 parts by mass of aluminum oxide, and 1 to 2 parts by mass of titanium oxide. The acrylic emulsion at least contains 53 ± 2 parts by mass of an acrylic acid polymer prepared by emulsion polymerization of an acrylate monomer using an emulsifier and 43 ± 2 parts by mass of water. The polymer cement layer-forming composition prepared by mixing the mixture and the emulsion was applied and dried then the polymer cement layer 2 was obtained. The polymer cement layer 2 is a composite layer in which the acrylic resin has a Portland cement content of 50% by mass. The resin layer-forming composition is an acrylic silicone-based resin. The acrylic silicone-based resin is an emulsion composition containing 60 parts by mass of an acrylic silicone resin, 25 parts by mass of titanium dioxide, 10 parts by mass of ferric oxide, and 5 parts by mass of carbon black.

### [Example 2]

The polymer cement layer-forming composition used in Example 1 was applied and dried to form a stack of two polymer cement layers 2 each having a thickness of 0.65 mm (total thickness of the two layers: 1.30 mm). Then, the resin layer-forming composition used in Example 1 was applied to the stack of polymer cement layers 2 and dried to form a stack of two resin layers 3 each having a thickness of 50 µm (total thickness of the two layers: 100 µm). Each layer was formed using a continuous coating and drying apparatus at a controlled temperature of 25°C in a factory. Accordingly, a structure protection sheet 1 having a total thickness of 1.40 mm was produced. The structure protection sheet 1 was also continuously produced in the factory and wound up together with the release sheet 4 into a roll.

### [Measurement of thickness variation]

In Examples 1 and 2, an about A4 size piece (200 mm × 300 mm) was cut out of the structure protection sheet 1 wound into a roll. The thickness at 14 points of the piece was measured, from which the thickness variation was calculated. The thickness variations in Example 1 and Example 2 were 26 µm and 26 µm, respectively.

### [Examples 3 to 5]

The total thickness of the structure protection sheet 1 in Example 1 was changed as follows. A protection sheet 1 produced in Example 3 was a stack having a total thickness of 0.76 mm consisting of a polymer cement layer 2 having a thickness of 0.66 mm and a resin layer 3 having a thickness of 100 µm. A protection sheet 1 produced in Example 4 was a stack having a total thickness of 1.06 mm consisting of a polymer cement layer 2 having a thickness of 0.96 mm and a resin layer 3 having a thickness of 100 µm. A protection sheet 1 produced in Example 5 was a stack having a total thickness of 1.57 mm consisting of a polymer cement layer 2 having a thickness of 1.47 mm and a resin layer 3 having a thickness of 100 µm. Other conditions were the same as those in Example 1.

### [Strength and water vapor transmission rate]

Strength and water vapor transmission rates of Examples 3 to 5 were measured. The strength was evaluated from a tensile strength at break measured using a tensile testing instrument (Shimadzu Corporation, AGS-J). The water vapor transmission rate (WVTR) is also known as "moisture permeability". It is an amount in grams of water vapor permeating a 1 m² film (structure protection sheet 1) per 24 hours, expressed as g/m²·day or g/m²/day, and is used as an index of water vapor barrier performance. The WVTR was measured in accordance with JIS K7129.

The measurement results were as follows: in Example 3, the strength was 8.5 N and the water vapor transmission rate was 18.2 g/m²·day; in Example 4, the strength was 14.7 N and the water vapor transmission rate was 13.0 g/m²·day; and in Example 5, the strength was 21.1 N and the water vapor transmission rate was 10.2 g/m²·day. All the sheets with the above-mentioned thicknesses have acceptable strength and water vapor transmission rate and are thus usable.

### [Comparative Example 1]

Spray coating to concrete at a construction site was reproduced. Under a work environment at a controlled temperature of about 25°C, an undercoat layer 22 containing an epoxy resin was formed on a concrete plate by spray coating. A single polymer cement layer 2 having a thickness of 1.47 mm was formed by spray coating once on a processing paper. Then, a single resin layer 3 having a thickness of 100 µm was formed by spray coating once on the polymer cement layer 2. It took two days to form each layer because of the time to stand still after coating (room temperature, 12 hours) and the time to dry (40°C, 24 hours). The total thickness of the polymer cement layer 2 and the resin layer 3 was 1.57 mm. After drying, the applied coat, i.e., a stack of the polymer cement layer 2 and the resin layer 3, was separated from the processing paper and the tensile strength at break was measured using a tensile testing instrument (Shimadzu Corporation, AGS-J).

### [Comparative Example 2]

The controlled temperature of the work environment in Comparative Example 1 was changed to about 40°C. A stack of two polymer cement layers 2 having a thickness of 1.18 mm was formed by spray coating twice. A stack of two resin layers 3 having a thickness of 100 µm was formed by spray coating twice. The total thickness of the structure protection sheet 1 was 1.28 mm. Other conditions were the same as those in Comparative Example 1.

### [Comparative Example 3]

The controlled temperature of the work environment in Comparative Example 3 was set to about 10°C. A stack of two polymer cement layers 2 having a thickness of 1.29 mm was formed by spray coating twice. A stack of two resin layers 3 having a thickness of 100 µm was formed by spray coating twice. The total thickness of the structure protection sheet 1 was 1.39 mm. Other conditions were the same as those in Comparative Example 1.

### [Strength and water vapor transmission rate]

In Comparative Examples 1 to 3, strength and water vapor transmission rates were measured as in Examples 3 to 5. The measurement results were as follows: in Comparative Example 1, the strength was 21.1 N and the water vapor transmission rate was 10.2 g/m²·day; in Comparative Example 2, the strength was 16.2 N and the water vapor transmission rate was 11.3 g/m²·day; and in Comparative Example 3, the strength was 17.8 N and the water vapor transmission rate was 11.4 g/m²·day. In Comparative Example 2, the viscosity rapidly increased during coating. Presumably, the usable time is quite short. In Comparative Example 3, the surface after coating and drying became whitish. Comparative Examples 1 to 3 were reproductions of spray coating to concrete at a construction site. All the sheets have a large thickness variation that is remarkably larger than the range of the present invention, ± 100 µm. Specifically, they have a thickness variation in a range of 222 µm (± 111 µm) to 260 µm (± 130 µm).

### [Example 6]

### (Production of precast member)

A precast member 31 was produced using the molding frame 24 illustrated in Fig. 6(A) by the method illustrated in Fig. 7. As illustrated in Fig. 6 and Fig. 7, the precast member 31 was produced by placing the protection sheet 1 in Example 1 on an inner surface of the molding frame 24, and then pouring the concrete composition 21' into the molding frame. The produced precast member 31 has the protection sheet 1 on a portion or the entirety of its surface.

### [Example 7]

A precast member 31 was produced as in Example 6 using the protection sheet 1 in Example 2.

### [Comparative Example 4]

A protection sheet 1 described in paragraphs 0052 to 0054 in JP 2004-36097 A was used instead of the protection sheet used in Example 6 or 7. This protection sheet 1 includes a fluororesin film and an adhesive layer. The adhesive layer side of the protection sheet 1 was attached to concrete 21, thereby producing a precast member 31.

### [Adhesion evaluation]

The precast members 31 produced in Examples 6 and 7 and Comparative Example 4 were evaluated for the adhesion between the concrete 21 and the protection sheet 1. The adhesion was tested by peeling the protection sheet 1 in the direction of 180 degrees from the concrete 21. Although the test was a qualitative test, the precast members 31 in Example 6 and 7 revealed that the polymer cement layer 2 remained on the surface of the concrete 21 so that interlayer peeling, demonstrating strong adhesion at an interface between the concrete 21 and the protection sheet 1. In contrast, in the precast member 31 in Comparative Example 4, the adhesive layer constituting the protection sheet 1 was peeled at an interface with the concrete 21, demonstrating a weaker adhesion between the protection sheet 1 and the concrete 21 than the adhesion in Examples 1 and 2.

### REFERENCE SIGNS LIST

- 1: structure protection sheet
- 2: polymer cement layer
- 3: resin layer
- 4: release sheet
- 21: structure (concrete)
- 21': concrete composition (structure formation composition)
- 22: undercoat layer
- 23: adhesive agent
- 24: molding frame
- 31: precast member

## Claims

1. A structure protection sheet, comprising:
a polymer cement layer on a side facing a structure; and
a resin layer on the polymer cement layer,
the structure protection sheet having a thickness distribution of not more than ± 100 µm.

2. The structure protection sheet according to claim 1,
wherein the polymer cement layer and the resin layer each consist of a single layer or a stack of layers.

3. The structure protection sheet according to claim 1 or 2,
wherein the polymer cement layer is a layer of a cement component-containing resin.

4. The structure protection sheet according to any one of claims 1 to 3, comprising a release sheet on a face of either the polymer cement layer or the resin layer.

5. The structure protection sheet according to any one of claims 1 to 4, which is a waterproof sheet having a water vapor transmission rate of 10 to 50 g/m²·day.

6. A construction method using the structure protection sheet according to any one of claims 1 to 5, the method comprising:
applying an adhesive agent to a structure; and
then attaching the structure protection sheet.

7. The construction method using the structure protection sheet according to claim 6, comprising placing an undercoat layer between the structure and the adhesive agent.

8. A precast member comprising the structure protection sheet according to any one of claims 1 to 5 on a portion or the entirety of its surface with no adhesive agent in between.

9. A method for producing a precast member, the method comprising:
placing a structure protection sheet on an inner surface of a molding frame; and
then pouring a concrete formation composition into the molding frame to produce a precast member,
wherein the precast member comprises the structure protection sheet on a portion or the entirety of its surface,
the structure protection sheet comprises a polymer cement layer and a resin layer on the polymer cement layer, and
the structure protection sheet has a thickness distribution of not more than ± 100 µm.
